# EUROPÄISCHE PATENTSCHRIFT

(11) **EP 2 168 936 B1**
(45) Veröffentlichungstag und Bekanntmachung des Hinweises auf die Patenterteilung: **19.11.2014**
(21) Anmeldenummer: 09168473.8
(22) Anmeldetag: 24.08.2009
(51) Int. Cl.: C04B 35/119, C04B 35/488, C04B 35/628

(54) **Verfahren zur Herstellung eines feinteiligen Pulverwerkstoffs**
Method for producing a fine powder material
Procédé de fabrication d'une matière active en poudre à fines particules

(30) Priorität: 29.08.2008 DE 102008044906
(43) Veröffentlichungstag der Anmeldung: 31.03.2010
(73) Patentinhaber: IBU-tec advanced materials AG, 99425 Weimar (DE)
(72) Erfinder: Leidolph, Lars, 99084, Erfurt (DE); Khalil, Tarek, 99423, Weimar (DE); Schwendinger, Bettina, 99423, Weimar (DE)
(74) Vertreter: Finger, Catrin

(56) Entgegenhaltungen:
- EP-A- 0 241 647
- EP-A- 1 083 151
- EP-A- 1 580 178
- WO-A-2006/117318
- DE-A1-102006 046 806
- US-A- 4 665 040
- US-A1- 2005 137 077
- LIANG B ET AL: "Nanostructured zirconia-30 vol.% alumina composite coatings deposited by atmospheric plasma spraying", THIN SOLID FILMS, ELSEVIER-SEQUOIA S.A. LAUSANNE, CH, vol. 484, no. 1-2, 22 July 2005 (2005-07-22), pages 225-231, XP027865579, ISSN: 0040-6090 [retrieved on 2005-07-22]

## Beschreibung

Die Erfindung betrifft ein Verfahren zur Herstellung eines feinteiligen Pulverwerkstoffs, nach den Merkmalen des Oberbegriffs des Anspruchs 1.

Seit Mitte der 1980er Jahre hat Zirkonoxid einen festen Platz unter den Hochleistungskeramiken. Unstabilisiertes Zirkonoxid (ZrO₂) weist bei Raumtemperatur eine monokline Kristallstruktur und bei Temperaturen über 1170°C eine tetragonale Kristallstruktur auf. Da es beim Phasenübergang zwischen tetragonal zu monoklin zu einem Wechsel der Gitterstruktur kommt, was mit einer Volumenzunahme verbunden ist, wird reines ZrO₂ mit Stabilisatoren (auch Additives oder Dotierungselemente) versetzt, um eine spätere Zerstörung beim Sinterprozess zu vermeiden. Mit Hilfe dieser Additive, beispielsweise aus der Gruppe der Oxide der Seltenerdmetalle (wie Yttrium, Cer), wird eine Stabilisierung der tetragonalen Phase erreicht. Solche Materialien werden allgemein als TZP (Tetragonal Zirconia Polycrytals) und im Besonderen, je nach stabilisierendem Element, beispielsweise als Y-TZP oder Ce-TZP bezeichnet. TZP zeichnet sich durch hervorragende Eigenschaften aus, namentlich hohe Biegefestigkeit und hohe Bruchzähigkeit, bei einem E-Modul vergleichbar mit Stahl.

Die Mischung von Zirkoniumoxid mit Aluminium führte zu keramischen Werkstoffen mit neuartigen Eigenschaften. Keramiken auf der Basis einer Mischung aus Zirkoniumoxid und Aluminiumoxid werden als so genanntes "mit Zirkoniumoxid zäh gemachtes Aluminiumoxid (ZTA)" bezeichnet. Die Abkürzung ZTA steht für "zirconia toughened alumina", welches beispielsweise eine Zusammensetzung von 20% ZrO₂ und 80% Al₂O₃ aufweist. Daneben gibt es Zirkoniumoxid mit dispergiertem Aluminiumoxid (ATZ), bei dem Aluminiumoxid in einer Matrix aus Zirkoniumoxid dispergiert ist, um das Gewicht zu vermindern, die Härte zu erhöhen und die Kosten für hochzähe Zirkoniumoxidkeramik zu senken. Die Abkürzung ATZ steht für "alumina toughened zirconia", welches beispielsweise eine Zusammensetzung von 80% ZrO₂ und 20% Al₂O₃ aufweist. Durch diese Mischung von Zirkoniumoxid und Aluminiumoxid wird die Zähigkeit gegenüber dem reinen Aluminiumoxids deutlich verbessert.

Aus dem Stand der Technik sind unterschiedliche Herstellungsverfahren für derartige Pulver auf Basis von Zirkoniumoxid-Aluminiumoxid bekannt. Beispielsweise werden diese durch mechanisches Mischen, beispielsweise unter Verwendung einer Kugelmühle, hergestellt. Alternativ kann auch ein Dispersion aus Zirkoniumoxid, Aluminiumoxide und eine flüssigen Medium (gegebenenfalls mit zusätzlichen Additiven) hergestellt werden, diese auf unterschiedliche Weise gemischt werden (zum Beispiel mit Hilfe eines Mixers), der Filterkuchen mit einer Presse abgetrennt und anschließend getrocknet werden. Beide Methoden bergen jedoch die Gefahr von Phasentrennung und nicht ausreichend homogener Mischung. Nachteilig bei diesen Herstellungsverfahren ist die ungleichmäßige Verteilung der Aluminiumoxid- und Zirkoniumoxidpartikel, was bei der Herstellung von Keramiken zu Rissen führen kann. Zudem sind so hergestellte Pulver nach dem Stand der Technik oft nicht feinteilig genug.

Weiterhin wurden Verfahren vorgeschlagen, bei dem durch Neutralisation und gemeinsames Ausfällen aus einer Lösung, die Zirkonium- und Aluminiumkomponenten enthält, gemischte Niederschläge erhalten und dann kalziniert sowie fein pulverisiert werden (K.Tsukuma, Journal of Materials Science Letter, Band 4 (1985), Seite 857-861. Bei dieser Variante erwies es sich jedoch, dass die Zusammensetzung der gemischten Niederschläge schwankt, teilweise wegen der lokal unterschiedlichen Konzentration des als Fällungsmittel benutzten Ammoniaks und teilweise wegen der Unterschiedlichkeit der Fällungsbedingungen in der Anfangs- und in der Endstufe.

Aus EP 0435677A2 ist ein Verfahren bekannt, bei dem α-Al₂O₃ - Partikel mit einer Partikelgröße von 0,1 µm bis 2 µm in ein Sol dispergiert werden, welches anschließend thermisch behandelt wird. Daraus resultiert ein α-Al₂O₃ / ZrO₂ Gemisch mit sehr inhomogener Partikelverteilung, da die α-Al₂O₃-Partikel im Bereich von 0,1 µm bis 2 µm und die ZrO₂ - Partikel beispielsweise bei 15 nm liegen.

In DE 3714911C2 wird ein Verfahren zur Herstellung einer Aufschlämmung eines ultrafeinen Pulvers auf Zirkoniumoxid-Aluminiumoxid- Basis beschrieben dass ein Aluminiumsalz oder ein Aluminiumoxidhydrat in Ab- oder Anwesenheit eines als Stabilisator wirkenden Metallsalzes in einer wässrigen Zirkoniumoxidchloridlösung gelöst oder suspendiert wird, die erhaltene Lösung oder Suspension mit Harnstoff oder einem zur Bildung von Ammoniak durch Hydrolyse fähigen Stoff vermischt wird und das so gebildete Gemisch bei einer Temperatur von 140 DEG C bis 300 DEG C und einem Druck von 3,92 bar bis 147 bar (4 kg/cm<2> bis 150 kg/cm<2>) in einem Hochtemperatur- und Hochdruckbehälter umgesetzt wird. Dieses beschriebene Verfahren im Hochtemperatur- und Hochdruckbehälter ist durch hohe Herstellungskosten gekennzeichnet. Die Partikelgröße wird dabei nur von einem noch nicht kalzinierten Zwischenprodukt angegeben, die Partikelgröße des fertigen ATZ-Pulver ist lediglich mit ultrafein angegeben und bleibt damit unklar. Zudem ist für die Dotierung des ZrO₂ lediglich die Möglichkeit mit 3 mol-% Y₂O₃ vorgesehen.

In EP 0279673 wird ein Sol-Gel-Prozess zur Herstellung von ZTA-Pulverwerkstoff vorgeschlagen, wobei α-Al₂O₃ - Impfkristalle mit einer Partikelgröße zwischen 0,1 µm und 0,5 µm dem Sol-Gel-Prozess zugesetzt werden.

Festzustellen ist zudem, dass die derzeit kommerziell angebotenen ATZ- bzw. ZTA-Pulverwerkstoffe keine ausreichende Homogenität aufweisen, da sie im Wesentlichen durch Mischen von Al₂O₃ und dotierten ZrO₂ im vorgesehenen Verhältnis hergestellt werden. Dabei unterscheidet sich die Partikelgröße der eingesetzten Al₂O₃- und dotierten ZrO₂ Pulver erheblich, wobei Al₂O₃-Pulver mit einer mittleren Partikelgröße von deutlich mehr als 100 nm eingesetzt werden.

In der EP 1 580 178 A1 ist ein Zr0₂-Al₂0₃-Komposit-Keramik-Material mit hervorragendem Verschleißwiderstand, Härte, Festigkeit und Belastbarkeit offenbart. Das keramische Material umfasst eine Zr0₂-Phase gebildet aus mindestens 90 vol% tetragonalem Zr0₂ und vorzugsweise 10 bis 12 mol% Ce0₂ als Stabilisator sowie eine Al₂0₃-Phase. Ein Anteil der Al₂0₃-Phase im Keramik-Material ist in einem Bereich von 20 bis 70 vol%. Das keramik-Material umfasst Komposit-Partikel, die darin verteilt sind, wobei jeder Kompositpartikel eine dreifache Nanokompositstruktur aufweist, bei der ein Al₂0₃-Korn, das ein kleines Zr0₂-Korn beinhaltet, innerhalb eines Zr0₂-Korns gefangen ist.

In der US 4,665,040 sind Aluminium-Zirkonium-Keramik-Pulver offenbart, die zwischen 10 Gew.-% und 25 Gew.-% Zirkonium-Oxid mit spezifischen kristallinen Phasen und zwischen 75 Gew.-% bis 90 Gew.-% Aluminium-Oxid mit spezifischen kristallinen Phasen enthalten. Die Pulver haben eine mittlere Partikelgröße von nicht mehr als 1000 Angström und eine Zweiphasenstruktur, wobei die Zirkoniumoxid-Phase in der Aluminiumoxidphase verteilt vorliegt. Ein Verfahren zur Herstellung solcher Aluminium-Zirkonium-Keramik-Pulver umfasst die Schritte: Suspendieren von Komposit-Pulvern mit einer spezifischen chemischen Zusammensetzung und einer spezifischen mittleren Partikelgröße in Wasser um einen Schlicker zu bilden, Gefriertrocknen des Schlickers, Kalzinieren des gefriergetrockneten Pulvers bei Atmosphärendruck in Luft bei einer Temperatur von 800 °C bis 1250 °C.

Aus der DE 10 2006 046 806 A1 ist ein Verfahren zur Herstellung von beschichteten Partikeln bekannt, bei dem eine Rohstoffmischung aus mindestens einer Rohstoffkomponente und mindestens eine Beschichtungsmischung aus jeweils mindestens einer Beschichtungskomponente hergestellt wird und bei dem die Rohstoffmischung in einen Heißgasstrom eines thermischen Reaktors mit pulsierender Verbrennung eingebracht wird und dort die Partikel aus der Rohstoffmischung gebildet werden und bei dem mindestens eine der Beschichtungsmischungen in mindestens einen einem Zuführungspunkt der Rohstoffmischung im Heißgasstrom nachgelagerten Bereich eingebracht wird und die Partikel zumindest teilweise beschichtet werden.

Die DE 10 2004 048 230 A1 offenbart ein Verfahren zur Herstellung einer Suspension von kristallinen und/oder verdichteten, oberflächenmodifizierten, nanoskaligen Partikeln in einem Dispergiermittel, wobei das Verfahren folgende Schritte umfasst: a) Eine Suspension von amorphen oder teilkristallinen, nicht oberflächenmodifizierten, nanoskaligen Teilchen in einem Dispergiermittel wird wärmebehandelt, um die Teilchen zu kristallisieren und/oder zu verdichten, und b) die Suspension der kristallisierten und/oder verdichteten, nicht oberflächenmodifizierten, nanoskaligen Teilchen in dem Dispergiermittel von Schritt a) oder in einem anderen Dispergiermittel wird in Anwesenheit eines Modifizierungsmittels durch mechanische Beanspruchung aktiviert, so dass die Teilchen durch das Modifizierungsmittel oberflächenmodifiziert werden, um eine Suspension von kristallinen und/oder verdichteten,; oberflächenmodifizierten, nanoskaligen Teilchen zu erhalten. Das Dispergiermittel kann aus dem erhaltenen Kolloid entfernt werden, um das entsprechende Pulver zu erhalten. Durch das Verfahren können hochdisperse Teilchen mit einem mittleren Teilchendurchmesser unter 20 nm erhalten werden, die auf einfache Weise mit einer für den jeweiligen Anwendungszweck massgeschneiderten Oberflächenchemie versehen werden können.

Der Erfindung liegt die Aufgabe zugrunde, ein verbessertes Herstellungsverfahren für ZTA- bzw. ATZ-Werkstoffe in Form von Pulver anzubieten.

Die Aufgabe hinsichtlich eines verbesserten Herstellungsverfahrens wird erfindungsgemäß durch die im Patentanspruch langegebenen Merkmale gelöst.

Beim ersten erfindungsgemäßen Herstellungsverfahren werden eine oder mehrere Rohstoffmischungen, die in Summe zumindest alle Komponenten der gewünschten Zusammensetzung der herzustellenden Pulverwerkstoffe enthalten, in den pulsierenden oder nicht-pulsierenden Heißgasstrom (HGS) eingebracht, wobei sich aus der Rohstoffmischung die festen Partikel in dem HGS bilden. Die so hergestellten ZTA- bzw. ATZ-Pulverwerkstoffe können in einem anschließenden Verfahrensschritt in pressfähige Granulate umgewandelt werden.

Bei einem zweiten, nicht erfindungsgemäßen Herstellungsverfahren wird eine Suspension aus zumindest einer flüssigen Komponente (bevorzugt Wasser) und zumindest aus den Komponenten feste Al₂O₃-Partikeln, einem oder mehrerer in gelöster Form vorliegenden Zirkoniumkomponenten und zumindest einem in gelöster Form vorliegenden Dotierungsstoff hergestellt, diese Suspension wird über bekannte Granulierungsverfahren, zum Beispiel mittel Sprühgranulation, in ein Granulat überführt, wobei danach das Granulat sowohl die Al₂O₃-Partikel, den Dotierungsstoff und der nun in fester Form vorliegende Zirkoniumkomponente feinverteilt beinhaltet. Dieses Granulat kann anschließend in einer bevorzugten Ausführungsform thermisch im Temperaturbereich zwischen 300°C und 1400°C behandelt werden, wobei die Nebenkomponenten, wie beispielsweise Salzkomponenten zumindest teilweise abgetrennt werden und entsprechend nach der Behandlung ein Al₂O₃/ZrO₂-Granulat vorliegt, welches sich zur Herstellung von Formkörpern eignet. In einer weiteren Ausführungsform kann das Granulat ohne die zusätzliche thermische Nachbehandlung bei 300°C bis 1400°C zu einem Grünkörper gepresst werden, wobei im anschließenden Sinterprozess die Nebenkomponenten, wie beispielsweise Salzkomponenten ausgetrieben werden und ein Al₂O₃/ZrO₂-Formkörper entsteht. Diese Variante ist dann besonders geeignet, wenn die ZrO₂-Konzentration in dem keramischen Werkstoff weniger als 40 Gew.-%, bevorzugt weniger 30 Gew.-% und besonders bevorzugt weniger 20 Gew.-% beträgt.

Beim ersten erfindungsgemäßen Herstellungsverfahren erfolgt die Partikelbildung im pulsierenden oder nicht-pulsierenden Heißgasstrom. Ein pulsierende Heißgasstrom wird dabei mit einer gleichmäßigen Schwingungsfrequenz im Bereich größer 10 Hz und einer Druckamplitude von größer 5 mbar definiert. Reaktoren zur Herstellung feinteiliger Pulver im pulsierenden Heißgasstrom sind beispielsweise aus der DE102006046803A1 in Form von Pulsationsreaktoren bekannt. Reaktoren mit nicht-pulsierendem Heißgasstrom, wie zum Beispiel Heißwandreaktoren, Sprüh-bzw. Spraypyrolysereaktoren, Heißgas-Reaktoren etc., sind beispielsweise aus der WO2000/078672 A1 bekannt. Für die Herstellung der erfindungsgemäßen ATZ- bzw. ZTA-Pulverwerkstoffe sind alle Reaktoren geeignet, bei denen eine geeignete Rohstoffmischung in einen Heißgasstrom eingebracht werden kann, wobei die Temperatur des Heißgasstroms am Aufgabeort der Rohstoffmischung weniger als 1200°C, bevorzugt weniger als 1000°C besonders bevorzugt weniger als 900°C aufweist.

Als Rohstoffkomponenten (auch Edukte genannt) für die Rohstoffmischung zur Herstellung der Partikel kommen anorganische und/oder organische Stoffe wie Nitrate, Carbonate, Hydrogencarbonate, Carboxylate, Alkoholate, Acetate, Oxalate, Citrate, Halogenide, Sulfate, metallorganische Verbindungen, Hydroxide, Oxide oder Kombinationen dieser Stoffe in Betracht. Diese Stoffe sind die Basiskomponenten der Rohstoffmischung. Dabei kann die Rohstoffmischung in Form von festen Rohstoffen, als Rohstofflösung, Rohstoffsuspension, Rohstoffdispersion oder Rohstoffemulsion in den thermischen Prozess eingebracht, beispielsweise gesprüht oder zerstäubt werden. Zudem können die Rohstoffe oder Rohstoffmischungen in gasförmiger Form in den Ofen eingeleitet werden. Dazu werden die Rohstoffe bzw. Rohstoffmischung zunächst außerhalb des beschriebenen thermischen Reaktors in die Gasphase überführt, z. B. durch einen Verdampfer und dem Reaktor zugeführt. Es besteht dabei auch die Kombination verschiedener Zuführungsformen. Die Wahl des Aufgabeortes beeinflusst die nachfolgende thermische Behandlung, stellt somit eine bedeutende Steuergröße für die thermische Behandlung dar.

Die Rohstoffmischung enthält zumindest alle Komponenten der gewünschten Zusammensetzung der herzustellenden Pulverwerkstoffe. Zur Herstellung von Rohstoffmischungen in Form von Lösungen, Suspensionen und/oder Dispersionen werden gegebenenfalls Hilfsstoffe gemischt oder ungemischt zugeführt. Zur Bildung einer Lösung kann beispielsweise ein Lösungsmittel als Hilfsstoff hinzugefügt werden, in dem die beispielsweise feste Basiskomponente gelöst wird. Das Lösungsmittel kann auch dem Suspendieren oder Dispergieren der Rohstoffmischung dienen. Weiterhin kann mindestens eine organische und/oder anorganische kalorische Komponente als Hilfsstoff zugegeben werden. Damit ist eine Komponente gemeint, die in einem thermischen Prozess zusätzlich kalorische Energie innerhalb des sich bildenden Partikels und/oder im Bereich zwischen den Partikeln freisetzt. Des Weiteren können Tenside und/oder Emulgatoren als Hilfsstoffe zugegeben werden, um die Tröpfchengröße der dispersen Phase in der Suspension oder Dispersion einzustellen oder die Tröpfchengröße bei der Materialaufgabe durch Einsprühen zu beeinflussen und so mittelbar die Größe der sich bildenden Partikel zu beeinflussen. Auch kann der Rohstoffmischung als Hilfskomponente mindestens ein Hilfsstoff zur Stabilisierung der Rohstoffdispersion oder Rohstoffsuspension oder Rohstoffemulsion zugegeben werden.

Eine besonders enge und definierte Kornverteilung der Partikel kann beispielsweise durch einen ein- oder mehrstufigen nasschemischen Zwischenschritt vor der thermischen Behandlung im thermischen Reaktor erfolgen. Dazu kann über die Art und Weise und die Prozessführung des nasschemischen Zwischenschritts, beispielsweise über eine Cofällung, die Partikelgröße zunächst in der Rohstoffmischung eingestellt werden. Für den nasschemischen Zwischenschritt einer wässrigen und/oder alkoholischen Rohstoffmischung können bekannte Methoden wie beispielsweise Cofällung, Hydroxidfällung angewandt werden.

In einer bevorzugten Ausführungsform erfolgt die gemeinsame Aufgabe aller Rohstoffkomponenten in Form einer Rohstoffmischung an einem Aufgabeort in den pulsierenden oder nicht-pulsierenden Heißgasstrom (HGS).

In einer anderen bevorzugten Ausführungsform erfolgt die Aufgabe von zumindest zwei Rohstoffmischungen an unterschiedlichen Aufgabeorten in den pulsierenden oder nicht-pulsierenden Heißgasstrom, wobei eine Rohstoffmischung zumindest die zirkoniumhaltigen Rohstoffkomponenten sowie eventuelle Dotierungskomponenten zur Bildung der dotierten oder undotierten ZrO₂-Phase enthält und zumindest eine weitere Rohstoffmischung zumindest die aluminiumhaltigen Komponenten zur Bildung der Al₂O₃-Phase enthält. Je nach Art der Prozessführung können so Gemische aus zumindest separat vorliegenden Al₂O₃-Partikeln und dotiertem oder undotiertem ZrO₂-Partikeln erhalten werden. Bei alternativer nicht erfindungsgemäßer Prozessführung kann zumindest eine teilweise Beschichtung entweder der Al₂O₃-Partikel durch eine ZrO₂-Phase oder der ZrO₂-Partikel mit Al₂O₃ erfolgen.

Durch die Auswahl geeigneter Prozessparameter, wie Verweilzeit, Prozesstemperatur etc., können die Partikeleigenschaften definiert eingestellt werden. So kann beispielsweise durch die Einstellung der maximalen Prozesstemperatur und der Verweilzeit der Partikel im thermischen Reaktor der Grad der Aggregation und die Primärpartikelgröße eingestellt werden.

Aggregate entstehen typischerweise in thermischen Prozessen, bei denen durch hohe Prozesstemperaturen eine teilweise oder vollständige Sinterung des Materials eintritt. Als Sinterung wird dabei die Ausbildung einer partiellen Teilschmelze verstanden. Die notwendige Prozesstemperatur zum Beginn der Sinterung ist dabei abhängig von der Partikelgröße. Generell gilt, je kleiner die Partikelgröße je niedriger ist die Sintertemperatur. Mit Sinterung ist ein Partikelwachstum verbunden. Steigt der partielle Schmelzanteil an, bildet sich ein pyroplastischer Zustand der Partikel aus, wobei zusammenliegende oder -stoßende Partikel einen festen Verbund eingehen. Bei der Abkühlung bilden die zusammengelagerten Partikeln ein Aggregat, wobei die Oberflächen fest verwachsen sind. Festgestellt wurde nun, dass durch die Reduzierung der Prozesstemperatur der Grad der Aggregation der erfindungsgemäßen ATZ bzw. ZTA - Pulverwerkstoffe. Das beschriebene Herstellungsverfahren im pulsierenden oder nicht-pulsierenden Heißgasstrom bietet dazu die Möglichkeit die Prozesstemperatur im Bereich von 200°C - 1400°C definiert einzustellen und unterscheidet sich dabei grundsätzlich von anderen thermischen Herstellungsverfahren wie Verbrennung im Flammenprozess (auch als Pyrolyse bekannt) oder Herstellung in Plasmareaktoren.

Die erfindungsgemäße Reduzierung der maximalen Prozesstemperatur unterhalb von 1000°C, bevorzugt unterhalb von 900°C kann jedoch zu einer unvollständigen Umsetzung der Rohstoffmischung führen. Diese möglichen unvollständigen thermischen Zersetzungsreaktionen könnten dabei das Abtrennen von Bestandteilen durch Calcinationsprozesse, beispielsweise die thermische Zersetzung von Salzen, oder das Verbrennen von organischen Komponenten, beispielsweise metallorganischen Rohstoffkomponenten, sein. Wird beispielsweise eine Mischung aus Aluminiumtri-sek-butylat und Zirkon-n-propylat eingesetzt, entweicht Kohlenstoff und Wasser aus den Verbindungen, wobei sich feste Partikel aus ZrO₂ und Al₂O₃ bilden. Zur vollständigen Umwandlung der Rohstoffmischung beispielsweise in Al₂O₃ bzw. ZrO₂ werden entsprechend hohe Temperaturen, zum Beispiel oberhalb 1000°C benötigt. Bei diesen hohen Prozesstemperaturen bilden sich jedoch die beschriebenen harten Aggregate aufgrund von Sintererscheinungen. Reduziert man die Prozesstemperatur, sinkt der Grad der Aggregation, jedoch erfolgt möglicherweise keine vollständige Umsetzung mehr beispielsweise zum ZrO₂ bzw. Al₂O₃. Vielmehr verbleiben Rückstände der Rohstoffkomponenten, der verwendeten Lösungsmittel oder Additive, wie Dispergierhilfsmittel, Emulgatoren etc. bzw. thermische Zersetzungsprodukte aus diesen Komponenten, wie beispielsweise elementarer Kohlenstoff, als Rückstand. Der Anteil des Rückstandes ist dabei prinzipiell abhängig von der Prozesstemperatur. Sinkt die Prozesstemperatur steigt der Anteil an verbleibenden Rückstand. Dabei bildet der verbleibende Rückstand mit den gebildeten Partikeln eine feste Struktur. Dabei handelt es sich nicht um eine Beschichtung der Partikel durch den Rückstand, vielmehr liegen beide Komponenten im Partikel nebeneinander vor, wobei der Rückstand zum Teil vom gebildeten Al₂O₃ bzw. ZrO₂-Partikel eingeschlossen sein kann. Bei dem Rückstand kann es sich um nicht umgewandelte Rohstoffkomponenten oder um Zwischenprodukte bei der thermischen Umwandlung der Rohstoffkomponenten bis hin zum elementaren Kohlenstoff handeln. Die Art des verbleibenden Rückstands hängt von den eingesetzten Rohstoffkomponenten und der Prozessführung ab und kann prinzipiell in einen organischen bzw. anorganischen Rückstand unterteilt werden.

Von einer vollständigen Umwandlung wird hier definitionsgemäß davon ausgegangen, wenn der nicht- bzw. nichtvollständig thermisch umgesetzte Anteil der Rohstoffkomponenten (Rückstand) kleiner 0,1 % ist.

Erfindungsgemäß wurde festgestellt, dass durch die Einstellung eines definierten Temperaturbereichs die harten Aggregate aufgrund einsetzender Sinterung der Partikel im thermischen Reaktor weitgehend verhindert werden, wobei der verbleibende Anteil an Rückstand in diesem Temperaturbereich keine signifikanten Beeinträchtigungen in der Anwendung hervorruft. Erfindungsgemäß wird dies erreicht wenn die Art des verbleibenden Rückstands Kohlenstoff aufweist. Gefunden wurden, dass sich folgende Zusammensetzungen besonders gut eignen:
- Gemisch aus Al₂O₃- und dotierten/undotierten ZrO₂-Partikeln, die einen kohlenstoffhaltigen Rückstand aufweisen, wobei der Gesamtkohlenstoffanteil im Bereich von größer 0,1 Gew.-% bis 4 Gew.-%, bevorzugt im Bereich von größer 0,1 Gew.-% bis 2 Gew.-%, besonders bevorzugt von größer 0,1 Gew.-% bis 1 Gew.-%.

Al₂O₃ tritt in unterschiedlichen Modifikationen auf. Typischerweise wird bei der Herstellung von Formkörpern die α-Al₂O₃-Modifikation bevorzugt, da die mit dem Sinterprozess verbundene Phasenumwandlung der Übergangstonerden zu einer Volumenänderung führt, die wiederum zu Rissen im keramischen Körper führen kann. Als Übergangstonerde werden hier alle Al₂O₃-Modifikationen außer Korund (α-Al₂O₃) verstanden. Mit α-Al₂O₃ ist die Korundmodifikation (Hochtemperaturmodifikation) gemeint. Festgestellt wurde jedoch, dass die α-Al₂O₃-Modifikation bei Pulverwerkstoffen aus Al₂O₃ und dotiertem ZrO₂ nicht zwangsläufig zur Herstellung von Formkörpern mit gewünschter Festigkeit notwendig ist. Dies gilt insbesondere bei Al₂O₃/ZrO₂-Pulverwerkstoffen, bei denen der Al₂O₃-Gehalt kleiner 50 Gew.-%, bevorzugt kleiner 30 Gew.-%, besonders bevorzugt kleiner 20 Gew.-% ist. Neben dem Gehalt an Al₂O₃ im Pulverwerkstoff hängt dies jedoch auch von der Art und Konzentration der ZrO₂-Dotierung ab. Durch Auswahl geeigneter Dotierungselemente in geeigneter Konzentration können beispielsweise auch Volumenänderungen, bedingt durch den Modifikationswechsel der Übergangstonerden zur α-Al₂O₃-Modifikation im keramischen Sinterprozess ausgeglichen werden. Damit ist es möglich, auch ATZ- bzw. ZTA-Pulverwerkstoffe zur Herstellung von Formkörpern einzusetzen, wobei das Al₂O₃ nicht in der α-Al₂O₃-Modifikation vorliegt. Neben der α-Al₂O₃-Modifikation wird die Einstellung der γ, η oder δ -Al₂O₃-Modifikation beziehungsweise ein Gemisch daraus bevorzugt. Dies resultiert aus dem bevorzugten Temperaturbereich bei der thermischen Herstellung von unterhalb 900°C und der bevorzugten Einstellung eines Gesamtkohlenstoffgehaltes im Pulverwerkstoff bis zu 4 Gew.-%.

Die Verwendung von reinem ZrO₂ ist zur Herstellung von Formkörpern aufgrund des Phasenübergang von tetragonal nach monoklin und der damit verbundenen Volumenzunahme, bei der ein Formkörper zerstört werden kann, nicht möglich. Dem ZrO₂ müssen deshalb Stabilisatorzusätze in Form anderer Metalloxide, wie beispielsweise Kalziumoxid, Magnesiumoxid, Yttriumoxid, Hafniumoxid oder Ceroxid, beigegeben werden um die Volumenzunahme zu unterbinden. Je nach Anteil der Stabilisatorzusätze kann die tetragonale Hochtemperaturphase des Zirkoniumdioxids bis auf Raumtemperatur völlig (tetragonal stabilisiertes Zirkoniumdioxid - CSZ) oder teilweise stabilisiert werden. Teilstabilisiertes ZrO₂ ist ein Gemisch aus verschiedenen Phasen, wodurch die mechanischen Eigenschaften des Materials verbessert werden (Umwandlungsverstärkung). Man unterscheidet dabei zwischen vollstabilisiertem Zirkoniumoxid (FSZ - fully stabilized zirconia), teilstabilisiertem Zirkoniumoxid (PSZ - partly stabilized zirconia), welches in der Technik die größte Bedeutung hat, und dem polykristallinen tetragonalen Zirkoniumoxid (TZP - tetragonal zirconia polycrystal).

ZrO₂ kann im erfindungsgemäßen Pulverwerkstoff mit unterschiedlichen Dotierungskomponenten stabilisiert oder teilstabilisiert werden, beispielsweise mit Kalziumoxid, Magnesiumoxid, Yttriumoxid, Hafniumdioxid, Ceroxid oder Gemischen daraus. Die Art und der Anteil der Dotierungskomponenten beeinflusst maßgeblich die resultierenden Festigkeitseigenschaften des Formkörpers. Prinzipiell gilt dabei, dass geringere Konzentrationen an Dotierungskomponenten zu höheren Festigkeiten der Formkörper führen, wenn die Rissbildung durch die Volumenänderung bei der möglichen Phasenumwandlung durch unzureichende Stabilisierung ausreichend verhindert wird. Typischerweise wird ZrO₂ mit 3 mol-% Y₂O₃ stabilisiert. Bekannt ist auch die Stabilisierung mit 12 mol-% bis 14 mol-% CeO₂. Bei diesen Varianten wird üblicherweise eine Rissbildung im ausreichenden Maße verhindert.

Festgestellt wurde nun, dass die notwendige Dotierungskonzentration von ZrO₂ im erfindungsgemäßen Gemisch aus ZrO₂ und Al₂O₃, wo die ZrO₂-Partikel mit einer mittleren Partikeln von kleiner 100 nm, bevorzugt kleiner 50 nm, besonders bevorzugt kleiner 20 nm vorliegen, die Dotierungskonzentration deutlich reduziert werden kann. Die Dotierungskonzentration von Y₂O₃ kann beispielsweise auf kleiner 2 mol-%, bevorzugt kleiner 1,5 mol-%, besonders bevorzugt 1 mol-% gesenkt werden. Für die CeO₂-Dotierung sind so Konzentration von kleiner 10 mol-%, bevorzugt kleiner 8 mol-%, besonders bevorzugt kleiner 6 mol-% notwendig.

Feinteilige Pulver, insbesondere nanoskalige Pulver können nicht ohne weiteres verpresst und gesintert werden. Aufgrund der geringen Schüttdichte erfolgt beim Verpressen nur eine ungenügende Verdichtung zur Grünkeramik. Der noch bestehende hohe Porenanteil wird beim Sintern nicht geschlossen. Daraus resultieren niedrige Sinterdichten mit der Folge ungenügender Festigkeiten. Aus diesem Grund werden aus derartigen Pulverwerkstoffen zunächst pressfähige Granulate hergestellt. Die Anforderungen an keramische Granulate sind dabei sehr hoch, da sie wesentlich die resultierenden Keramikeigenschaften beeinflussen.

Aus den so hergestellten erfindungsgemäßen ATZ- bzw. ZTA-Pulverwerkstoffen können durch bekannte Granulationsverfahren, wie beispielsweise Sprühgranulation, Granulate hergestellt werden. Dazu werden die Pulver zunächst in einen Schlicker überführt. Als Schlicker wird dabei eine Suspension mit hoher Viskosität (hoher Feststoffanteil) aus den Pulverwerkstoff, zugesetzten Additiven und einem flüssigem Medium (zumeist Wasser) bezeichnet. Dieser Schlicker wird anschließend granuliert, zum Beispiel mittels Sprühgranulierungsverfahren. Durch Variation von Art und Konzentration zugegebener Additive, wie Dispergatoren, Bindemittel, Presshilfsmittel und Gleitmittel, sowie durch gezieltes Einstellen der Prozessparameter beim Granulationsprozess, wie beispielsweise Prozesstemperatur, Verweilzeit oder Tropfengröße, kann gezielt Einfluss auf die Festigkeit, Form und Granulatgrößenverteilung genommen werden. Bevorzugt werden Granulate bestehend aus Vollgranalien mit möglichst idealer Kugelform (→ Fließfähigkeit) und einer mittleren Granaliengröße im Bereich von 10 µm bis 500 µm, bevorzugt 20 µm bis 200 µm, besonders bevorzugt 50 µm bis 100 µm.

Zur Herstellung von Formkörper werden die ATZ- oder ZTA-Granulate zu entsprechenden Grünkörpern verpresst und anschließend gesintert. Ein ungezügeltes Kristallwachstum beim Sintervorgang kann durch Zusatzstoff wie beispielsweise MgO, CaO, TiO₂ im Konzentrationsbereich von 0,05 % bis 1 % erreicht werden, die entsprechend zu einem einheitlichen, dicht gesinterten Formkörper mit kleiner Korngröße führen. Das MgO kann dem hergestellten ATZ- bzw. ZTA-Pulverwerkstoff vor oder während der Granulation zugeführt werden. Alternativ kann zumindest eine Rohstoffmischung magnesiumhaltige Komponenten enthalten, wobei daraus im thermischen Verfahren MgO resultiert, welches feinverteilt im ZTA- bzw.- ATZ-Werkstoff vorliegt.

Mit diesem erfindungsgemäßen Verfahren können durch die Variation der Rohstoffkomponenten sowie der prozesstechnischen Parameter, wie Verweilzeit oder Prozesstemperatur, definierte Partikeleigenschaften, Phasenzusammensetzungen und Pulverzusammensetzungen eingestellt werden. Bevorzugt können dabei die folgenden ATZ- bzw. ZTA-Pulver generiert werden, die in einem anschließend Granulationsschritt in Granulate überführt werden können:
▪ ATZ-Pulverwerkstoff, bei dem die Al₂O₃-Partikel mit einem Anteil bezogen auf dem Pulverwerkstoff von 0,5 Gew.-% bis 50 Gew.-%, bevorzugt von 10 Gew.-% bis 30 Gew.-%, besonders bevorzugt mit 15 Gew.-% bis 25 Gew.-% und die dotierten ZrO₂ Partikel getrennt nebeneinander im Pulver vorliegen, wobei die Al₂O₃-Partikel mit einem Anteil von größer 95 Gew.-% in Bezug auf den Al₂O₃-Gehalt als Übergangstonerde vorliegen, wobei der Pulverwerkstoff weitere Komponenten wie beispielsweise MgO im Bereich von 0,1 Gew.-% bis 4 Gew.-% aufweisen kann, wobei die mittlere Primärpartikelgröße der Al₂O₃- und der dotierten ZrO₂-Partikel im Bereich von 5 nm bis kleiner 50 nm, bevorzugt im Bereich 5 nm bis 30 nm, besonders bevorzugt im Bereich 10 nm bis 20 nm liegt, wobei der Pulverwerkstoff einen Kohlenstoffgehalt im Bereich von größer 0,1 Gew.-% bis 4 Gew.-%, bevorzugt im Bereich von größer 0,1 Gew.-% bis 2 Gew.-%, besonders bevorzugt von größer 0,1 Gew.-% bis 1 Gew.-% aufweisen kann.
▪ ATZ-Pulverwerkstoff, bei dem die Al₂O₃-Partikel mit einem Anteil bezogen auf dem Pulverwerkstoff von 0,5 Gew.-% bis 50 Gew.-%, bevorzugt von 10 Gew.-% bis 30 Gew.-%, besonders bevorzugt mit 15 Gew.-% bis 25 Gew.-% und die dotierten ZrO₂ Partikel getrennt nebeneinander im Pulver vorliegen, wobei die Al₂O₃-Partikel mit einem Anteil von größer 90 Gew.-% in Bezug auf den Al₂O₃-Gehalt als α-Al₂O₃ vorliegen, wobei der Pulverwerkstoff weitere Komponenten wie beispielsweise MgO im Bereich von 0,1 Gew.-% bis 4 Gew.-% aufweisen kann, wobei die mittlere Primärpartikelgröße der Al₂O₃- Partikel im Bereich von 30 nm bis kleiner 100 nm, bevorzugt im Bereich 50 nm bis 90 nm, besonders bevorzugt im Bereich 60 nm bis 80 nm und die mittlere Primärpartikelgröße der dotierten ZrO₂-Partikel im Bereich von 5 nm bis kleiner 50 nm, bevorzugt im Bereich 5 nm bis 30 nm, besonders bevorzugt im Bereich 10 nm bis 20 nm liegt, wobei der Pulverwerkstoff einen Kohlenstoffgehalt im Bereich von größer 0,1 Gew.-% bis 4 Gew.-%, bevorzugt im Bereich von größer 0,1 Gew.-% bis 2 Gew.-%, besonders bevorzugt von größer 0,1 Gew.-% bis 1 Gew.-% aufweisen kann.
▪ ATZ-Pulverwerkstoff (nicht erfindungsgemäß), bei dem die Al₂O₃-Partikel mit einem Anteil bezogen auf dem Pulverwerkstoff von 0,5 Gew.-% bis 50 Gew.-%, bevorzugt von 10 Gew.-% bis 30 Gew.-%, besonders bevorzugt mit 15 Gew.-% bis 25 Gew.-% durch eine dotierte ZrO₂-Phase zumindest teilweise beschichtet (Komposit) wird oder dotierte ZrO₂-Partikel zumindest teilweise beschichtet (Komposit), wobei der Pulverwerkstoff separat, heißt liegen im Gemisch nebeneinander vor, und/oder der Kernkomponente und/oder der Beschichtungskomponente weitere Komponenten wie beispielsweise MgO im Bereich von 0,1 Gew.-% bis 4 Gew.-% aufweisen kann, wobei die mittlere Primärpartikelgröße des Pulverwerkstoffs im Bereich von 5 nm bis kleiner 500 nm, bevorzugt im Bereich 10 nm bis 100 nm, besonders bevorzugt im Bereich 20 nm bis 50 nm liegt, wobei der Pulverwerkstoff einen Kohlenstoffgehalt im Bereich von größer 0,1 Gew.-% bis 4 Gew.-%, bevorzugt im Bereich von größer 0,1 Gew.-% bis 2 Gew.-%, besonders bevorzugt von größer 0,1 Gew.-% bis 1 Gew.-% aufweisen kann.
▪ ZTA-Pulverwerkstoff, bei dem die Al₂O₃-Partikel mit einem Anteil bezogen auf dem Pulverwerkstoff von 50 Gew.-% bis 99 Gew.-%, bevorzugt von 60 Gew.-% bis 90 Gew.-%, besonders bevorzugt mit 70 Gew.-% bis 85 Gew.-% und die dotierten ZrO₂ Partikel getrennt nebeneinander im Pulver vorliegen, wobei die Al₂O₃-Partikel mit einem Anteil von größer 95 Gew.-% in Bezug auf den Al₂O₃-Gehalt als Übergangstonerde vorliegen, wobei der Pulverwerkstoff weitere Komponenten wie beispielsweise MgO im Bereich von 0,1 Gew.-% bis 4 Gew.-% aufweisen kann, wobei die mittlere Primärpartikelgröße der Al₂O₃- und der dotierten ZrO₂-Partikel im Bereich von 5 nm bis kleiner 50 nm, bevorzugt im Bereich 5 nm bis 30 nm, besonders bevorzugt im Bereich 10 nm bis 20 nm liegt, wobei der Pulverwerkstoff einen Kohlenstoffgehalt im Bereich von größer 0,1 Gew.-% bis 4 Gew.-%, bevorzugt im Bereich von größer 0,1 Gew.-% bis 2 Gew.-%, besonders bevorzugt von größer 0,1 Gew.-% bis 1 Gew.-% aufweisen kann.
▪ ZTA-Pulverwerkstoff, bei dem die Al₂O₃-Partikel mit einem Anteil bezogen auf dem Pulverwerkstoff von 50 Gew.-% bis 99 Gew.-%, bevorzugt von 60 Gew.-% bis 90 Gew.-%, besonders bevorzugt mit 70 Gew.-% bis 85 Gew.-% und die dotierten ZrO₂ Partikel getrennt nebeneinander im Pulver vorliegen, wobei die Al₂O₃-Partikel mit einem Anteil von größer 90 Gew.-% in Bezug auf den Al₂O₃-Gehalt als a-Al₂O₃ vorliegen, wobei der Pulverwerkstoff weitere Komponenten wie beispielsweise MgO im Bereich von 0,1 Gew.-% bis 4 Gew.-% aufweisen kann, wobei die mittlere Primärpartikelgröße der Al₂O₃-Partikel im Bereich von 30 nm bis kleiner 100 nm, bevorzugt im Bereich 50 nm bis 90 nm, besonders bevorzugt im Bereich 60 nm bis 80 nm und die mittlere Partikelgröße der dotierten ZrO₂-Partikel im Bereich von 5 nm bis kleiner 50 nm, bevorzugt im Bereich 5 nm bis 30 nm, besonders bevorzugt im Bereich 10 nm bis 20 nm liegt, wobei der Pulverwerkstoff einen Kohlenstoffgehalt im Bereich von größer 0,1 Gew.-% bis 4 Gew.-%, bevorzugt im Bereich von größer 0,1 Gew.-% bis 2 Gew.-%, besonders bevorzugt von größer 0,1 Gew.-% bis 1 Gew.-% aufweisen kann.
▪ ZTA-Pulverwerkstoff (nicht erfindungsgemäß), bei dem die Al₂O₃-Partikel mit einem Anteil bezogen auf dem Pulverwerkstoff von 50 Gew.-% bis 99 Gew.-%, bevorzugt von 60 Gew.-% bis 90 Gew.-%, besonders bevorzugt mit 70 Gew.-% bis 85 Gew.-% durch eine dotierte ZrO₂-Phase zumindest teilweise beschichtet (Komposit) wird oder dotierte ZrO₂-Partikel zumindest teilweise beschichtet (Komposit), wobei der Pulverwerkstoff separat, heißt liegen im Gemisch nebeneinander vor, und/oder der Kernkomponente und/oder der Beschichtungskomponente weitere Komponenten wie beispielsweise MgO im Bereich von 0,1 Gew.-% bis 4 Gew.-% aufweisen kann, wobei die mittlere Primärpartikelgröße des Pulverwerkstoffs im Bereich von 5 nm bis kleiner 500 nm, bevorzugt im Bereich 10 nm bis 100 nm, besonders bevorzugt im Bereich 20 nm bis 50 nm liegt, wobei der Pulverwerkstoff einen Kohlenstoffgehalt im Bereich von größer 0,1 Gew.-% bis 4 Gew.-%, bevorzugt im Bereich von größer 0,1 Gew.-% bis 2 Gew.-%, besonders bevorzugt von größer 0,1 Gew.-% bis 1 Gew.-% aufweisen kann.

Als Komposit, Kompositmaterial oder Kompositwerkstoff wird ein aus mehreren Komponenten, beispielsweise unterschiedlichen Phasen wie ZrO₂ und Al₂O₃, zusammengesetztes Material bezeichnet, wobei die Phasen miteinander eine feste Verbindung eingehen, beispielsweise Anhaftung oder eine keramische Verwachsung. Kompositpartikel können dabei Kern-Hülle-Partikel sein (Core-Shell) oder Partikel, bei dem eine Phase zum Beispiel ZrO₂ in eine andere Phase, zum Al₂O₃ eingebettet ist (Multiple-Core-Shell). Unter einer dotierten Zirkoniumphase werden alle Verbindungen des Zirkoniums verstanden, die sich als Beschichtung eignen, beispielsweise dotiertes ZrO₂, Zirkoniumsalze oder organische Zirkoniumverbindungen.

Bei einem zweiten, nicht erfindungsgemäßen Herstellungsverfahren wird eine Suspension aus zumindest einer flüssigen Komponente und zumindest aus den Komponenten feste Al₂O₃-Partikeln, einem oder mehrerer gelöster Zirkoniumsalze und zumindest einem in gelöster Form vorliegenden Dotierungsstoff hergestellt, diese Suspension wird über bekannte Granulierungsverfahren in ein Granulat überführt.

Die Suspensionsherstellung erfolgt dabei mit dem Fachmann bekannten Verfahren. Die Reihenfolge, wie die einzelnen Komponenten bei der Herstellung zugegebenen werden, ist dabei nicht fest, sondern richtet sich nach den technischen und stofflichen Erfordernissen.

Die Suspension enthält Al₂O₃-Partikel, bevorzugt in der α-Al₂O₃-Modifikation, denkbar sind jedoch auch alle anderen Übergangsmodifikationen des Al₂O₃. Die Suspension enthält Al₂O₃-Gehalt im Bereich von 1 Gew.-% bis 60 Gew.-%.

Zumindest eine zirkoniumhaltige Komponente liegt in der Suspension in gelöster Form vor. Dazu können feste zirkoniumhaltige anorganische und/oder organische Rohstoffkomponenten wie Nitrate, Carbonate, Hydrogencarbonate, Carboxylate, Alkoholate, Acetate, Oxalate, Citrate, Halogenide, Sulfate, metallorganische Verbindungen, Hydroxide, Oxide oder Kombinationen zunächst separat in Lösung gebracht werden und/oder in der Suspension gelöst werden. Alternativ können flüssige zirkoniumhaltige Rohstoffkomponenten, wie metallorganische Verbindungen, der Suspension zugesetzt werden.

Die Suspension enthält weiterhin alle Dotierungskomponenten sowie gegebenenfalls MgO, beispielsweise im Konzentrationsbereich von 0,05 Gew.-% bis 1 Gew.-%, zur Vermeidung eines ungezügelten Kristallwachstums beim späteren Sintervorgang.

In einer bevorzugten Ausführungsvariante kann das gelöste Zirkonium in der Suspension, zum Beispiel durch bekannte Methoden wie beispielsweise Cofällung, Hydroxidfällung oder Sol-Gel-Methoden, in eine feste oder gelartige Form überführt werden.

Als flüssige Phase der Suspension ist Wasser bevorzugt, wenngleich die Suspension auch andere anorganische und oder organische Flüssigkeiten als Zusatzkomponenten oder zum vollständigen oder teilweisen Ersatz beinhalten kann.

Gegebenenfalls werden der Suspensionen weitere Hilfsstoffe gemischt oder ungemischt zugeführt. Zur Lösung möglicher zirkoniumhaltiger Komponenten kann beispielsweise ein Lösungsmittel als Hilfsstoff hinzugefügt werden. Das Lösungsmittel kann auch dem Suspendieren oder Dispergieren dienen. Weiterhin kann eine organische und/oder anorganische kalorische Komponente als Hilfsstoff zugegeben werden. Des Weiteren können Tenside und/oder Emulgatoren als Hilfsstoffe zugegeben werden, um beispielsweise die Tröpfchengröße bei der Materialaufgabe einzustellen und so mittelbar die Größe der sich bildenden Partikel zu beeinflussen. Auch kann der Rohstoffmischung als Hilfskomponente mindestens ein Hilfsstoff zur Stabilisierung der Rohstoffdispersion oder Rohstoffsuspension oder Rohstoffemulsion zugegeben werden. Zudem kann die Suspension Additive wie Dispergatoren oder Presshilfsmittel enthalten.

Aus der so hergestellten Suspension werden bei der nicht erfindungsgemäßen Ausführungsform des Verfahrens Al₂O₃-haltige Granulate hergestellt. In einer bevorzugten Ausführungsform erfolgt die Granulation durch einen Sprühgranulationsprozess. Sprühgranulieren ist dabei die Trocknung von Flüssigkeiten (Lösungen, Suspensionen, Schmelzen) bei gleichzeitigem Aufbau von Granulaten. Keime für die Granulate können vorgelegt werden (Fremdkeime) oder bilden sich durch Abrieb und Bruch (Eigenkeime). Die eingesprühte Flüssigkeit beschichtet die Keime und wird abgetrocknet.

Im Vergleich zu Agglomeraten sind Sprühgranulate dichter und härter. Beim Sprühgranulationsprozess wird die Suspension in einem geeigneten thermischen Reaktor, zum Beispiel Sprühtrockner bei Prozesstemperaturen im Bereich von 80°C bis 150°C, eingebracht, wobei sich aus den verteilten Rohstofftröpfchen die Granulate im Reaktor bilden. Die Granulateigenschaften, wie beispielsweise Granulatgröße und -verteilung, Granulatform, Restfeuchte etc., können beispielsweise durch Variation der prozesstechnischen Parameter, wie Verweilzeit, Aufgabemenge, Prozesstemperatur etc. oder die eingestellte Tropfengröße eingestellt werden. Durch den Granulationsprozess entweicht die verwendete flüssige Phase (beispielsweise das Wasser) zumindest nahezu vollständig. Dies gilt auch für andere flüssige Komponenten zumindest teilweise, wobei sich hier auch ein Feststoffanteil zurückbleiben kann. Ziel ist ein trockenes Granulat mit einem physikalisch gebundenen Wasseranteil von kleiner 2 Gew.-%, bevorzugt kleiner 1 Gew.-%, besonders bevorzugt kleiner 0,5 Gew.-%.

Bei der Granulation können die gelösten Verbindungen durch den Übergang in die feste Form, beispielsweise Rekristallisation der Salze, zu einer ausreichenden Granalienfestigkeit genügen. Dies ist vorteilhaft, da keine zusätzlichen Bindemittel erforderlich sind. Welche Granalienfestigkeit erforderlich ist, richtet sich nach dem anschließenden Press- und Sinterprozess zur Herstellung von Formkörpern und kann daran angepasst werden. Die resultierende Festigkeit kann dabei durch Art und Konzentration der Rohstoffe sowie der prozesstechnischen Parameter beim Granulieren eingestellt werden. Durch die Zugabe weiterer Additive zur Suspension, wie Dispergatoren, Bindemittel, Presshilfsmittel und Gleitmittel, ergeben sich weitere Einstellungsmöglichkeiten.

Das so hergestellte Granulat enthält neben den Al₂O₃-Partikeln weitere Komponenten in Abhängigkeit der zugegebenen Komponenten zur Herstellung der Suspension. Zudem muss das Zirkonium nicht als ZrO₂, sondern kann noch anders gebunden, beispielsweise als Salz, vorliegen. Das Granulat kann dabei einen Anteil an Nebenbestandteilen beinhalten. Als Nebenbestandteile werden dabei alle Komponenten bezeichnet, die nicht Al₂O₃, Zirkonium (hier berechnet als ZrO₂) oder Dotierungsstoffen (einschließlich MgO) sind. Die Granulate können Nebenbestandteile im Bereich von 0,5 Gew.-% bis 60 Gew.-%, bevorzugt 5 Gew.-% bis 50 Gew.-%, besonders bevorzugt 10 Gew.-% bis 30 Gew.-% aufweisen.

In einer Ausführungsform wird das so hergestellte Granulat direkt zur Herstellung von Formkörpern verwendet. Dazu kann das Granulat zu einem Grünkörper gepresst werden, wobei im anschließenden Sinterprozess die Nebenbestandteile, wie beispielsweise Salzkomponenten, ausgetrieben werden und ein Al₂O₃/ZrO₂-Formkörper entsteht, wobei zusätzliche Dotierungskomponenten und/oder weitere Oxide, wie beispielsweise MgO, in dem Formkörper vorhanden sein können. Diese Variante ist dann besonders geeignet, wenn die ZrO₂-Konzentration in dem Formkörper aus keramischen Werkstoff weniger als 40 Gew.-%, bevorzugt weniger 30 Gew.-% und besonders bevorzugt weniger 20 Gew.-% beträgt.

In einer weiteren bevorzugten Ausführungsform wird das hergestellte Granulat zusätzlich thermisch im Temperaturbereich zwischen 300°C und 1400°C, bevorzugt im Bereich 500°C bis 1000 °C, zum Beispiel in einem Drehrohrofen, einer Wirbelschicht oder ähnlichen Reaktoren, behandelt, wobei die Nebenbestandteile, wie beispielsweise Salzkomponenten zumindest teilweise abgetrennt werden und entsprechend nach der Behandlung ein Al₂O₃/ZrO₂-Granulat vorliegt, welches sich zur Herstellung von Formkörpern eignet. Der Anteil der Nebenbestandteile liegt nach dieser thermischen Behandlung bevorzugt im Bereich 0,01 Gew.-% bis 10 Gew.-%, besonders bevorzugt im Bereich 0,1 Gew.-% bis 2 Gew.-%. Durch den thermischen Prozess können die Nebenbestandteile auch umgewandelt werden und entsprechend als Zwischen- oder Endprodukt der thermischen Zersetzung der Nebenbestandteile im Granulat vorliegen.

### Beispiele 1)

Zunächst werden 243g Y-Acetat (YC₆H₉O₆ x 4 H₂O) in 243g Triethylamin (TEA) unter erwärmen und rühren gelöst. Dazu werden dazu 7.75kg Zr-n-Propylat, 3.63kg Al-tri-sec.-butylat und 0.9kg 2-Propanol gegeben. Diese so gebildete Rohstoffmischung in Form einer Rohstofflösung wird bei einem Durchsatz von 6 kg/h mit Hilfe einer Schlauchpumpe in einen pulsierenden Heißgasstrom eines Pulsationsreaktors (bekannt aus DE102006046803A1) am Anfang des Resonanzrohrs bezogen auf den Heißgasstrom direkt hinter der Brennkammer über eine 1,8 mm Titandüse fein eingestäubt und thermisch aufgegeben.

### Reaktor-Parameter:

- Temperatur am Aufgabeort der Rohstofflösung : 850°C
- Schwingungsfrequenz Ausgang Brennkammer : 25 Hz
- Druckamplitude Ausgang Brennkammer : 10 mbar

Vor Eintritt in die Abscheideinrichtung wird der die gebildeten Partikel enthaltende Heißgasstrom durch Zufuhr von Kühlluft auf ca. 160 °C abgekühlt. Als Abscheideinrichtung zum Abtrennen der feinteiligen Partikel aus dem Heißgasstrom wird ein Schlauchfilter verwendet.

Der so hergestellte Pulverwerkstoff weist sehr homogen verteilte Al₂O₃- und dotierte ZrO₂-Partikel in einem Verhältnis von 20 Gew.-% Al₂O₃ und 80 Gew.-% dotiertes ZrO₂ auf. Die Dotierung der ZrO₂-Partikel beträgt 2 mol-% bezogen auf den ZrO₂-Anteil. Die spezifische Oberfläche des ATZ-Pulverwerkstoffs beträgt 100 m²/g. Aus der Untersuchung am Transelektronenmikroskop (TEM) ergibt sich eine mittlere Primärpartikelgröße (d₅₀) von 15 nm. Die Partikel weisen keine Agglomeration aufgrund von Sintererscheinungen (z.B. Sinterhalsbildung) auf. Die C_{ges}-Konzentration des ATZ-Pulverwerkstoff beträgt 0,2 Gew.-%.

Aus dem hergestellten ATZ-Pulverwerkstoff wird ein wässriger Schlicker mit der Zusammensetzung 40 Gew.-% ATZ-Pulverwerkstoff, 50 Gew.-% Wasser, 6 Gew.-% Ammoniumacrylat und 4 Gew.-% Dolapix PC 21 hergestellt (Hersteller Zschimmer & Schwarz GmbH & Co.KG). Ammoniumacrylat und Dolapix PC 21 dienen als Verflüssiger bzw. Dispergierhilfsmittel. Dieser Schlicker wird in einer Sprühgranulation bei 105°C zu einem Granulat umgewandelt. Die resultierenden Granalien weisen eine nahezu sphärische Form auf, Hohlkugelstruktur und Schalenbildung ist nicht signifikant nachweisbar, die mittlere Granaliengröße beträgt 50 µm. Das so hergestellte ATZ-Granulat eignet sich zu Herstellung von Forrnkörpern.

### Beispiele 2) (nicht erfindungsgemäß)

Es werden 500 g ZrCO₃ und 44,1 g Cer-Nitrat (Ce(NO₃)₃ x6 H₂O in 500 g Essigsäure und 500 g Wasser gelöst. Nach vollständiger Auflösung werden der Lösung weitere 3000 g Wasser und 1234 g α-Al₂O₃-Pulver (Lieferant IBU-tec, d₅₀ = 70 nm) zugeführt. Diese so gebildete Rohstoffmischung in Form einer Rohstoffsuspension wird bei einem Durchsatz von 6 kg/h mit Hilfe einer Schlauchpumpe in einen nicht-pulsierenden Heißgasstrom eines Heißgasreaktor (Sprühpyrolysereaktor) über eine 1,8 mm Titandüse fein eingestäubt und thermisch behandelt.

### Reaktor-Parameter:

- Temperatur am Aufgabeort der Rohstofflösung : 850°C
- Schwingungsfrequenz Ausgang Brennkammer : < 5 Hz
- Druckamplitude Ausgang Brennkammer : < 3 mbar

Vor Eintritt in die Abscheideinrichtung wird der die gebildeten Partikel enthaltende Heißgasstrom durch Zufuhr von Kühlluft auf ca. 160 °C abgekühlt. Als Abscheideinrichtung zum Abtrennen der feinteiligen Partikel aus dem Heißgasstrom wird ein Schlauchfilter verwendet.

Der so hergestellte Pulverwerkstoff weist Komposit-Partikel auf, bei denen die α-Al₂O₃ Partikel mit ZrO₂ beschichtet sind, wobei das Verhältnis 80 Gew.-% Al₂O₃ und 20 Gew.-% dotiertes ZrO₂ auf ist. Die Dotierungskonzentration von ZrO₂ beträgt 6 mol-% CeO₂ bezogen auf den ZrO₂-Anteil. Die spezifische Oberfläche des ATZ-Pulverwerkstoffs beträgt 17 m²/g. Aus der Untersuchung am Transelektronenmikroskop (TEM) ergibt sich eine mittlere Primärpartikelgröße (d₅₀) von 90 nm. Die Partikel weisen keine Agglomeration aufgrund von Sintererscheinungen (z. B. Sinterhalsbildung) auf. Die C_{ges}-Konzentration des ATZ-Pulverwerkstoff beträgt 0,12 Gew.-%.

### Beispiele 3) (nicht erfindungsgemäß)

Zunächst wird separat eine Lösung aus 563 g Eisessig und 563 kg Zr-Carbonat unter erwärmen hergestellt und eine zweite Lösung separat aus 173 g Wasser + 40 g Y-Acetat-Tetrahydrat, ebenfalls unter erwärmen. Beide Lösungen werden anschließend unter starkem Rühren vereinigt und es werden 1000 g Wasser, 107 g Optapix PAF 2 und 14 g Polyethylenglykol 8000 zugesetzt. Zu dieser Lösung werden unter starkem Rühren 1707 g α-Al₂O₃ (Lieferant IBU-tec, d₅₀ = 70 nm) zugegeben. Diese so gebildete Rohstoffmischung in Form einer Rohstoffsuspension wird bei einem Durchsatz von 3 kg/h mit Hilfe einer Schlauchpumpe in einen nicht-pulsierenden Heißgasstrom eines Sprühgranulierens über eine 1,8 mm Titandüse eingebracht und thermisch behandelt.

### Reaktor-Parameter:

- Temperatur am Aufgabeort der Rohstofflösung : 105°C
- Schwingungsfrequenz Ausgang Brennkammer : < 5 Hz
- Druckamplitude Ausgang Brennkammer : < 3 mbar

Im Sprühgranulier werden aus den Rohstofftröpfchen Granalien geformt. Erreichen die Granalien eine bestimmte Granaliengröße, werden die Granalien im Reaktor nicht mehr verwirbelt, fallen zu Boden und werden über einen Trichter als Produkt ausgetragen.

Die so hergestellten Granulate weisen eine Zusammensetzung von 70 Gew.-% Al₂O₃, 15 Gew.-% dotiertes ZrO₂ und 15 Gew.-% Nebenkomponenten, beispielsweise Salzkomponenten der zugegebenen Essigsäure auf. Die resultierenden Granalien weisen eine nahezu sphärische Form auf, Hohlkugelstruktur und Schalenbildung ist nicht signifikant nachweisbar, die mittlere Granaliengröße beträgt 60 µm.

## Patentansprüche

1. Verfahren zur Herstellung eines feinteiligen Pulverwerkstoffs auf Zirkoniumoxid-Aluminiumoxid-Basis, insbesondere von ATZ- und/oder ZTA-Pulverwerkstoffen, wobei zum einen aluminiumhaltige Rohstoffkomponenten und zum anderen zirkoniumhaltige Rohstoffkomponenten und Dotierungskomponenten in einer Rohstoffmischung oder zumindest zwei Rohstoffmischungen enthalten sind, wobei als Dotierungskomponente Kalziumoxid, Magnesiumoxid, Yttriumoxid, Ceroxid oder Gemische daraus vorgesehen sind, wobei die Rohstoffmischung an einem Aufgabeort oder die zumindest zwei Rohstoffmischungen an unterschiedlichen Aufgabeorten in einen pulsierenden oder nicht-pulsierenden Heißgasstrom feinteilig eingesprüht und bei einer Temperatur von weniger als 1200 °C thermisch behandelt und zu Partikeln verarbeitet wird/werden, die anschließend in einem Filtersystem vom Heißgasstrom abgeschieden werden, wobei Aluminiumoxid-Partikel (A1203) und dotierte Zirkoniumoxid-Partikel (Zr02) getrennt nebeneinander im Pulver vorliegen.

2. Verfahren nach Anspruch 1, wobei sowohl die Aluminiumoxid-Partikel (Al₂O₃) als auch die dotierten Zirkoniumoxid-Partikel (ZrO₂) eine mittlere Primärpartikelgröße im Bereich von 5 nm bis 100 nm, insbesondere von kleiner 100 nm aufweisen.

## Claims

1. Process for producing a finely divided powder material based on zirconium oxide-aluminium oxide, in particular ATZ and/or ZTA powder materials, wherein firstly aluminium-containing raw material components and secondly zirconium-containing raw material components and doping components are present in a raw material mixture or at least two raw material mixtures, with calcium oxide, magnesium oxide, yttrium oxide, cerium oxide or mixtures thereof being provided as doping component, the raw material mixture is sprayed as a fine spray at one place of introduction or the at least two raw material mixtures are sprayed as a fine spray at different places of introduction into a pulsating or nonpulsating hot gas stream and is/are thermally treated and processed to give particles at a temperature of less than 1200°C and the particles are subsequently separated off from the hot gas stream in a filter system, with aluminium oxide particles (Al₂O₃) and doped zirconium oxide particles (ZrO₂) being present separately side-by-side in the powder.

2. Process according to Claim 1, wherein both the aluminium oxide particles (Al₂O₃) and the doped zirconium oxide particles (ZrO₂) have an average primary particle size in the range from 5 nm to 100 nm, in particular less than 100 nm.

## Revendications

1. Procédé de fabrication d'un matériau en poudre finement divisé à base d'oxyde de zirconium et d'oxyde d'aluminium, notamment de matériaux en poudre ATZ et/ou ZTA, dans lequel d'une part des composants matières premières contenant de l'aluminium et d'autre part des composants matières premières contenant du zirconium et des composants de dopage sont contenus dans un mélange de matières premières ou dans au moins deux mélanges de matières premières, de l'oxyde de calcium, de l'oxyde de magnésium, de l'oxyde d'yttrium, de l'oxyde de cérium ou des mélanges de ceux-ci étant prévus en tant que composants de dopage, le mélange de matière première est pulvérisé sous forme finement divisée à un emplacement d'introduction ou les deux mélanges de matières premières ou plus sont pulvérisés sous forme finement divisée à des emplacements d'introduction différents dans un courant gazeux chaud pulsé ou non pulsé, et traités thermiquement à une température inférieure à 1 200 °C et transformés en particules, qui sont ensuite séparées du courant gazeux chaux dans un système de filtration, des particules d'oxyde d'aluminium (Al₂O₃) et des particules d'oxyde de zirconium dopé (ZrO₂) étant présentes séparément dans la poudre.

2. Procédé selon la revendication 1, dans lequel aussi bien les particules d'oxyde d'aluminium (Al₂O₃) que les particules d'oxyde de zirconium dopé (ZrO₂) présentent une taille de particule primaire dans la plage allant de 5 nm à 100 nm, notamment de moins de 100 nm.
